(19) Europäisches Patentamt
European Patent Office
Office européen des brevets

(11) **EP 3 971 584 B1**

(12) **EUROPEAN PATENT SPECIFICATION**

(45) Date of publication and mention
of the grant of the patent:
**07.06.2023 Bulletin 2023/23**

(21) Application number: **21198386.1**

(22) Date of filing: **22.09.2021**

(51) International Patent Classification (IPC):
*G01P 5/26* *(2006.01)* *G01P 13/02* *(2006.01)*
*G01S 17/58* *(2006.01)* *G01S 7/48* *(2006.01)*
*G01S 17/10* *(2020.01)* *G01S 17/87* *(2020.01)*

(52) Cooperative Patent Classification (CPC):
**G01S 17/58; G01P 5/26; G01P 13/025;
G01S 7/4808; G01S 17/10; G01S 17/87**

(54) **SHOCK FRONT LIDAR AIR DATA METHOD AND SYSTEM**

VERFAHREN UND SYSTEM FÜR STOSSFRONT-LIDARLUFTDATEN

PROCÉDÉ ET SYSTÈME DE DONNÉES D'AIR LIDAR DE FRONT DE CHOC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2020 US 202063081770 P
31.03.2021 US 202117218706**

(43) Date of publication of application:
**23.03.2022 Bulletin 2022/12**

(73) Proprietor: **Honeywell International Inc.
Charlotte, NC 28202 (US)**

(72) Inventors:
• **PETERSON, Timothy A.
Charlotte, 28202 (US)**
• **WIENKES, Lee R.
Charlotte, 28202 (US)**

(74) Representative: **Haseltine Lake Kempner LLP
Cheapside House
138 Cheapside
London EC2V 6BJ (GB)**

(56) References cited:
**US-A- 2 937 808    US-A- 3 172 104
US-A1- 2013 094 012    US-A1- 2017 168 161**

**Description**

**CROSS-REFERENCE TO RELATED APPLICATIONS**

**BACKGROUND**

Supersonic aircraft, such as military fighter aircraft, hypersonic missiles, or supersonic commercial jets, utilize air data sensor feedback to the pilot or flight management system to maintain flight control. Critical air data parameters may include angle of attack ($\alpha$) and angle of sideslip ($\beta$), as well as Mach number ($M$). Air data availability is exceedingly critical for maintaining control of dynamically unstable supersonic aircraft, which may require fly-by-wire automatic computer control loops.

Traditional air data sensors include pitot-static probes and angle of attack vanes. These systems suffer from certain drawbacks including, but not limited to: 1) source error corrections requiring calibration; 2) external protrusions or orifices prone to foreign object damage; and 3) sensor bandwidth limitations due to the mechanical nature of sensing action.

Optical air data systems may address such drawbacks by use of remote sensing through flush-mounted aircraft windows, wherein the backscatter of broadcast laser light is analyzed to infer air data parameters. However, optical air data systems most typically operate in Doppler velocimetry mode, which requires costly, high performance laser and sensor technology to perform the Doppler velocimetry.

Thus, there is a need to provide supersonic aircraft with an air data system having dissimilar failure modes to traditional vane/pitot systems, and without the costly and complicated nature of existing Doppler optical air data systems.

US2937808A discloses a process for semi-automatically determining certain flight characteristics of aircraft by the use of radar, the process being particularly adapted to finding Mach numbers and angles of attack and yaw.

US3172104A is concerned with methods and instrumentation for measuring certain flight variables of vehicles moving at speeds much greater than the velocity of sound.

US2013/094012A1 discloses a method and device for measuring the flow speed of a fluid, such as air. The method and device include the use of laser radiation.

US2017/168161A1 discloses an atmospheric turbulence data optical LIDAR system for computation of wind velocity.

**SUMMARY**

An air data measurement method and system are described herein. In one implementation, the method comprises obtaining one or more data measurements from an interrogation region with at least one light detection and ranging (LiDAR) unit along at least one line of sight. The method further comprises sending the one or more data measurements to a processor operative to perform data processing. The data processing includes extracting one or more shock front distances from the one or more data measurements, and calculating one or more shock front angles from the one or more shock front distances. The data processing further includes calculating one or more air data parameters from the one or more shock front angles.

**BRIEF DESCRIPTION OF THE DRAWINGS**

Exemplary features of the present disclosures will be apparent from the accompanying drawings. Non-limiting and non-exhaustive embodiments are described with reference to the accompanying drawings, wherein like labels or reference numbers refer to like parts throughout the various views unless otherwise specified. The sizes and relative positions of elements in the drawings are not necessarily drawn to scale. One or more embodiments are described hereinafter with reference to the accompanying drawings in which:

Figure 1 is a flow diagram of a method for operating a shock front light detection and ranging (LiDAR) air data system for determining air data parameters, according to one implementation;
Figure 2 is a schematic representation of the operation of a shock front LiDAR air data system, according to one implementation;
Figure 3 is a graphical representation of the operation of the shock front LiDAR air data system of Figure 2; and
Figure 4 is a block diagram of a system for determining air data parameters from a shock front LiDAR air data system, according to one embodiment.

## DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, or electrical changes may be made. Furthermore, the method presented in the drawing figures and the specification is not to be construed as limiting the order in which the individual steps may be performed. The following detailed description is, therefore, not to be taken in a limiting sense.

A method and system for obtaining shock front light detection and ranging (LiDAR) air data are described herein.

The present approach provides an optical air data system primarily, though not exclusively, for supersonic aircraft, which operates by sensing the relative position of a shock front with respect to the aircraft frame. As used herein, the term "supersonic" means aircraft speeds exceeding the speed of sound in the surrounding air. Aircraft traversing at supersonic speeds exhibit a characteristic shock front feature that develops from leading edges. The position of the shock front can be utilized to infer angles of attack and side slip, and the Mach number. The system described herein, while optical, avoids the complexity and challenges associated with Doppler optical air data systems because the laser and detector requirements are significantly relaxed, as hyperspectral Doppler shift analysis is not required.

The present approach provides for the measurement of air data parameters by use of one or more light detection and ranging (LiDAR) measurements of the distances to a shock front. As used herein, the phrase "air data parameters" denotes a full or partial set of measurements carrying information about the airflow with respect to an aircraft. These include angle of attack ($\alpha$) and angle of sideslip ($\beta$) and Mach number ($M$). The approach described herein can be configured to directly measure the Mach angle ($\mu$) using at least two lines of sight, which may be used to calculate the Mach number via the expression $M = 1/\sin(\mu)$. The Mach number may be related to the true airspeed and static air temperature via the Newton-Laplace equation. If the LiDAR air data system described herein is combined with a LiDAR internal or external method of static temperature measurement, the true airspeed may be produced as well as the Mach number.

A shock front is a sharp air density feature, which is typically described by "N-wave" pressure profiles and results in the characteristic sonic boom associated with supersonic flight. *See, e.g.,* Haglund, G. T., & Kane, E. J. (1974), Analysis of Sonic Boom Measurements Near Shock Wave Extremities for Flight Near Mach 1.0 and for Airplane Accelerations, (CR-2417); Maglieri, D. J., Ritchie, V. S., & Bryant, J. F. (1963), Nasa Technical Note, In-Flight Shock-Wave Pressure Measurements Above and Below a Bomber Airplane at Mach Numbers from 1.42 to 1.69, (TN D-1968). A bow shock front is a shock front that is experienced by the bow (or nose) of the aircraft. The system implementation is described herein with respect to the bow shock feature (adjacent to the nose of the aircraft), which provides a convenient shock front signature for LiDAR line of sight (LOS) instrumentation. However, the shock wave feature originating from any contour of an aircraft may be utilized.

Further details of various embodiments are described hereafter with reference to the drawings.

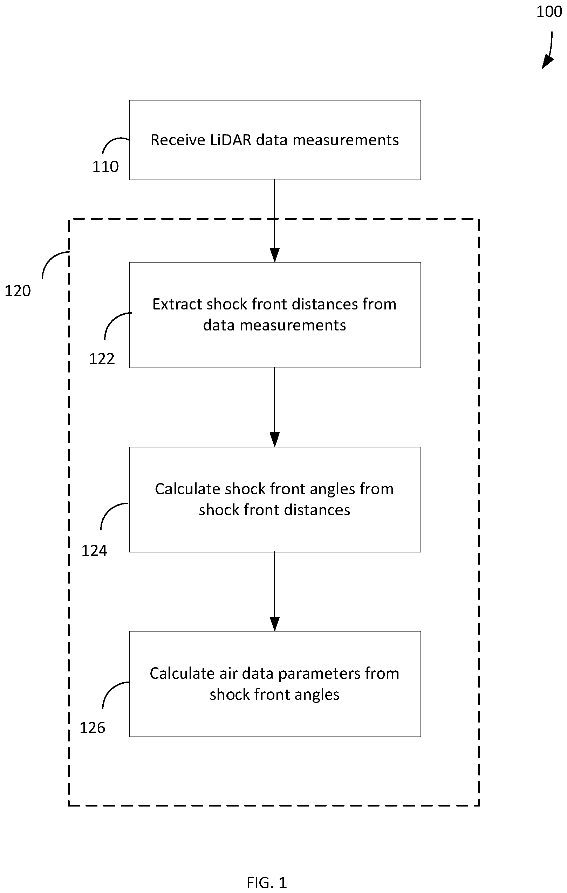

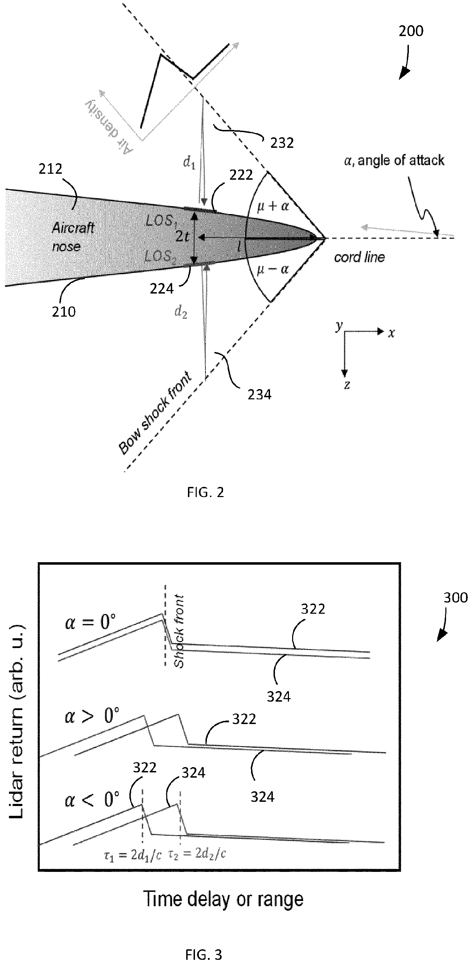

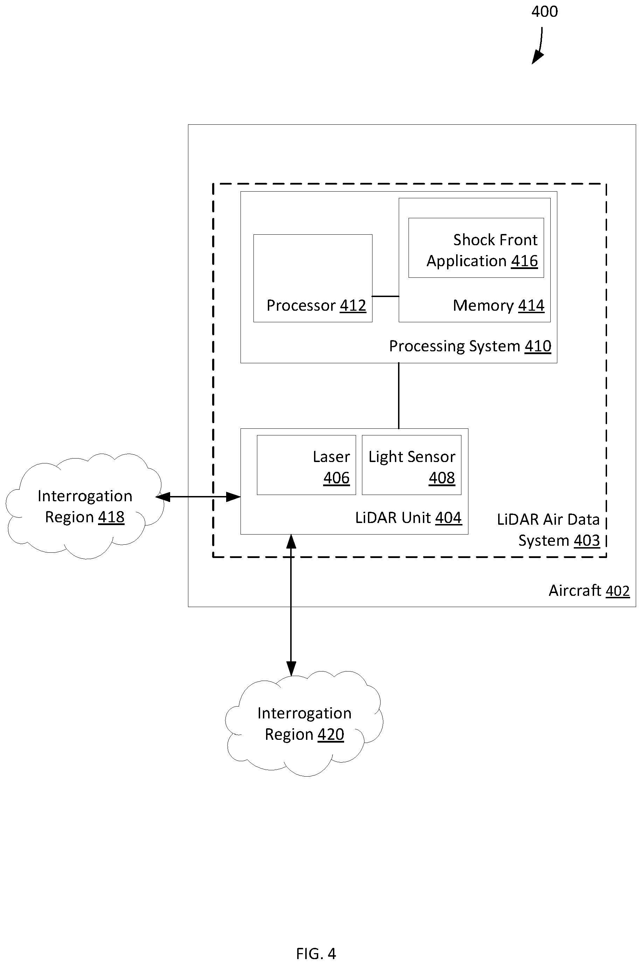

Figure 1 is a flow diagram of a method 100 for operating a shock front LiDAR air data system for an aircraft. Initially, method 100 obtains one or more LiDAR data measurements from an interrogation region along one or more lines of sight (*e.g.,* $LOS_1$, $LOS_2$, ... $LOS_N$) (block 110). The interrogation region corresponds to a region of interest external to the aircraft, in which light transmitted along a plurality of distinct LOS vectors collides with matter in the interrogation region. In some embodiments, the interrogation region(s) coincide with a shock front area experienced by the aircraft. The scattered light from the transmitted light signals can be received (that is, detected) by the LiDAR air data system, as described further below with reference to Figures 2 and 4.

The LiDAR data measurements for each LOS are then sent to a data processing unit (block 120). The data processing unit is operative to extract one or more shock front distances from the LiDAR data measurements (block 122). The shock front distance is measured from a point of the aircraft to a shock front, which is illustrated herein as a bow shock front. In an example, two shock front distances are calculated from light signals that are transmitted from opposite sides of the aircraft. In this example, the LOS vectors can be approximately parallel to each other. However, any number or orientation of arbitrary LOS vectors can be used under the condition that sufficient LOS vectors are utilized to acquire a desired air data parameter.

The data processing unit is further operative to calculate one or more shock front angles from the shock front distances (block 124). A "shock front angle" measurement as used herein means a raw angle measurement (*i.e.* an angular measurement that is directly measured) corresponding to a shock front with respect to a reference axis (*e.g.* the centerline or other axis) of the aircraft. A shock front angle measurement can include physical quantities relating to other angular air data parameters, such as a combination of air data parameters, which can be separated using conventional processing techniques. For example, as described in further detail with reference to Figure 2, a shock front angle measurement can include the quantity $\mu + \alpha$, which corresponds to the combined quantity of the Mach angle and the angle of attack.

The data processing unit is further operative to calculate one or more air data parameters from the shock front angles (block 126). The data processing unit may receive additional sensor data from an external input. Some air data parameters are angular quantities that are derived from the measured shock front angles. In the example above, the air data parameters $\mu$ and $\alpha$ can be extracted from the combined $\mu + \alpha$ and $\mu - \alpha$ measurements. The determined air data parameters are then output from the data processing unit for use in further navigation processing in the aircraft.

Figure 2 is a schematic representation of the operation of a shock front LiDAR air data system 200, according to one implementation on an aircraft 210, such as a supersonic jet. As shown in Figure 2, a first LiDAR unit 222 and a second LiDAR unit 224 are located on a nose 212 of aircraft 210. The distances $d_1$ and $d_2$ to a bow shock front in respective interrogation regions 232 and 234 is measured along each of $LOS_1$ and $LOS_2$ by analysis of the range-resolved backscattered return signal to LiDAR units 222 and 224.

The LiDAR units 222 and 224 operate in a similar fashion as traditional LiDAR units and as described in Figure 4. The range is given from the time-delayed LiDAR return signal with the standard $d = c/2\tau$ expression, where c is the speed of light and $\tau$ is the time delay. In one embodiment, the LiDAR units 222 and 224 include a pulsed laser that emits a pulse of light directed along the LOS, and a fast photodetector (*e.g.*, a photomultiplier or avalanche photodiode) triggered by the outgoing pulse records the time-resolved backscatter signal collected through colinear (or nearly colinear) receive optics. In one example implementation, the pulsed laser is a sub-nanosecond pulsed, ultraviolet laser for adequate range resolution and efficient Rayleigh scattering. The laser pulse energy is sufficiently large so that adequate shot-noise statistics are achieved to allow good feature resolution from the LiDAR return signal.

Figure 3 is a graphical representation 300 of the operation of shock front LiDAR air data system 200. The graphical representation 300 includes measurements of the LiDAR return signal magnitude (vertical axis) for three different angles of attack, $\alpha$, as a function of time delay or range (horizontal axis). The top set of lines correspond to an $\alpha = 0$, while the middle and bottom set of lines correspond to $\alpha$ being greater than or less than zero, respectively. For each return signal corresponding to LiDAR units 222 and 224 (signals 322 and 324 in Figure 3, respectively), a shock front is illustrated as a sharp local peak preceding a sudden decrease in the return signal amplitude. After a shock front occurs, the return signal sharply decreases and subsequently plateaus. As shown in Figure 3, the shock front distance along each LOS ($d_1$ and $d_2$) is determined by the time delay or range at which the LiDAR return signal experiences the local peak and subsequent plateau. The drop in LiDAR return signal magnitude occurs due to the air density feature that accompanies a shock front. The plateau corresponds to the LiDAR return signal from the unperturbed air in front of the aircraft bow shock front. The shock front signature on the LiDAR return signal may be fit and distances extracted with standard data processing techniques, such as, but not limited to, least-squares model fitting to N-wave models, or feature identification techniques such as derivative analysis. In addition, standard analog electronic methods may be used to measure the time delay directly from the LiDAR return detector signal. In one example, the time delay can be determined by measuring the time when the light beam is transmitted from the LiDAR unit (a first time), and measuring the subsequent time when the LiDAR unit receives a backscattered light signal (a second time). The time delay is then calculated as the difference between the first and second times.

The shock front distance measurement(s) may be used to infer shock front angles via the geometric relationships illustrated in Figure 2. The shock front angles (*e.g.* $\mu + \alpha$) can then be processed to determine air data parameters such as the angles of attack and/or sideslip ($\alpha$ and $\beta$, respectively) and Mach angle $\mu$ (which may be related to Mach number). As the Mach angle decreases, the distance to the shock front decreases along all LOS. As the angle of attack changes, an opposite distance change to the shock front is experienced by the up-facing LOS and the down-facing LOS. For certain geometries of the LOS and the Mach angle, straightforward expressions for $\alpha$ and $\mu$ are readily determined by trigonometry.

In the case of the two LOS bow shock configuration shown in Figure 2, where the LOS transverse (side to side) offset from the cord line is *t* and LOS are oriented perpendicular to the cord line in the *xz* plane, the angle of attack $\alpha$, and Mach angle $\mu$ may be given by the following expressions:

$$\alpha = \left(\frac{1}{2}\right)\left(\arctan\left[\frac{d_1+t}{l}\right] - \arctan\left[\frac{d_2+t}{l}\right]\right) , \qquad (1)$$

$$\mu = \left(\frac{1}{2}\right)\left(\arctan\left[\frac{d_1+t}{l}\right] + \arctan\left[\frac{d_2+t}{l}\right]\right), \qquad (2)$$

where $d_1$, $d_2$ are respectively the shock front distance along $LOS_1$ and $LOS_2$, and I is the longitudinal (front to back) offset from the nose of the LOS bases. The same concept with side-facing LOS may be used to determine the angle of sideslip. For example, if the LOS were oriented in the *xy* plane, an identical expression to equation (1) above may be given for angle of sideslip $\beta$.

Fully general expressions for $\mu, \alpha, \beta$ may be readily derived for arbitrary LOS orientation and number, transverse separation and nose offset *l*, with trigonometric relations such as the law of cosines. The supersonic airflow may be fully described by three independent angles, $\mu$, $\alpha$, $\beta$, which require, in general, at least three linearly-independent LOS measurements to uniquely constrain. If only a partial subset of $\mu$, $\alpha$, $\beta$ are desired, less than three LOS are required. For instance, as shown in Figure 1, two LOS may be configured to measure $\mu$, $\alpha$. In addition, a single LOS may be instrumented to measure one of $\mu$, $\alpha$, $\beta$, if the other parameters are provided from other probes or constrained *a priori* (*e.g.,* it may be convenient to assume $\beta$ = 0). If more LOS than the minimum number required are present, these LOS may provide redundancy in case of individual LOS failure.

Additionally, non-analytic or calibrated expressions for air data parameters from shock front distance measurements may be used within the present approach. An example where this may be required is for transonic flight regime with blunt leading edge shapes, where the Mach number is not sufficient to form an attached conic shock cone and concavity is present. *See, e.g.,* Ames research staff, & NACA (1953), Equation, Tables and Charts for Compressible Flow, (Report 1135), 73. Example ways to derive such non-analytic or calibrated expressions include flight tests, wind tunnel tests, and/or simulations.

Figure 4 is a block diagram of a system 400 for determining air data parameters for an aircraft 402, using a shock front LiDAR air data system 403, according to an exemplary embodiment. The LiDAR air data system 403 generally includes at least one LiDAR unit 404, and a processing system 410 operatively coupled to LiDAR unit 404. The LiDAR unit 404 can be utilized as described above, and is coupled to the exterior of aircraft (*e.g.* supersonic jet) 402. Although only one LiDAR unit 404 is shown in air data system 403, additional LiDAR units may also be coupled at different locations around aircraft 402. Such additional LiDAR units can be configured to emit light at distinct line of sight vectors from aircraft 402.

The LiDAR unit 404 includes a laser 406 configured to emit a light beam external to aircraft 402 towards at least one interrogation region. Two such regions, interrogation region 418 and interrogation region 420, are illustrated in system 400, understanding that more or fewer regions may be used. A light sensor 408 is configured to detect a portion of the backscattered light that is reflected from interrogation regions 418 and 420. In some embodiments, light sensor 408 includes a photomultiplier or avalanche photodiode. The interrogation regions 418 and 420 are selected by LiDAR unit 404 at an appropriate distance from aircraft 402 (for example, through focusing optics) to encompass shock front events experienced by aircraft 402, thereby enabling LiDAR unit 404 to receive backscattered signals that correspond to the shock front events, and thus determine air data parameters based on the shock front measurements.

The LiDAR unit 404 sends data corresponding to the received backscattered light to processing system 410. The processing system 410 includes at least one processor 412 that is operative to perform data processing on the received data from LiDAR unit 404. In some embodiments, processing system 410 includes a memory 414 configured to store a shock front application 416. The processor 412 can be configured to execute the shock front application 416 stored in memory 414 to perform a data processing algorithm to determine air data parameters based on shock front distance measurements captured by LiDAR unit 404. For example, shock front application 416 can provide instructions to processor 412 so that, when executed, processor 412 performs a method similar to that described in Figure 1. The air data parameters calculated from the shock front measurements can be sent to other systems or databases onboard aircraft 402 (*e.g.,* flight management systems, flight control systems, navigation trajectory systems, integrity monitoring systems, etc.) to aid the aircraft during flight.

The processing unit and/or other computational devices used in the method and system described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

Instructions for carrying out the various process tasks, calculations, and generation of other data used in the operation of the methods described herein can be implemented in software, firmware, or other computer readable instructions, which can be executed by at least one processor or processing unit. Generally, program modules include routines, programs, objects, data components, data structures, algorithms, and the like, which perform particular tasks or implement particular abstract data types. Computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims.

## Claims

1.   A method (100) comprising:

   obtaining one or more data measurements from an interrogation region (418, 420) with at least one light detection and ranging, LiDAR, unit along at least one line of sight, the LiDAR unit (222, 224, 404) comprising:

      a laser (406) configured to generate and emit a light beam transmitted to at least one interrogation region (418, 420) along at least one line of sight; and
      a light sensor (408) coupled to the laser (406) and configured to receive a backscattered portion of the light beam that corresponds to a shock front event; and

   sending the one or more data measurements to a processor (412) operative to perform data processing comprising:

      extracting one or more shock front distances ($d_1$, $d_2$) from the one or more data measurements;
      calculating one or more shock front angles ($\mu+\alpha$, $\mu-\alpha$) from the one or more shock front distances ($d_1$, $d_2$); and
      calculating one or more air data parameters from the one or more shock front angles ($\mu+\alpha$, $\mu-\alpha$), wherein the calculated one or more air data parameters comprise one or more of angle of attack ($\alpha$), angle of sideslip, or Mach angle.

2.   The method (100) of claim 1, wherein the interrogation region (418, 420) is outside of an aircraft (210, 402) during flight.

3.   The method (100) of claim 2, wherein the aircraft (210, 402) is traveling at a supersonic speed.

4.   The method (100) of claim 3, wherein the one or more shock front distances ($d_1$, $d_2$) are bow shock front distances adjacent to a nose (212) of the aircraft (210, 402).

5.   The method (100) of claim 1, wherein extracting one or more shock front distances ($d_1$, $d_2$) further comprises calculating a time delay between a first time when a light beam along the at least one line of sight is transmitted from the at least one LiDAR unit (222, 224, 404) and a second time when a backscattered portion of the light beam is received from the interrogation region (418, 420), and determining the one or more shock front distances ($d_1$, $d_2$) based on the time delay.

6.   A system (400) comprising:
   a light detection and ranging, LiDAR, air data system (400), comprising:

      a LiDAR unit (222, 224, 404) comprising:

         a laser (406) configured to generate and emit a light beam transmitted to at least one interrogation region (418, 420) along at least one line of sight; and
         a light sensor (408) coupled to the laser (406) and configured to receive a backscattered portion of the light beam that corresponds to a shock front event; and

      a processing system (410) coupled to the LiDAR unit (222, 224, 404), wherein the processing system (410) is operative to:

         receive one or more data measurements corresponding to the backscattered portion of the light beam;
         extract one or more shock front distances ($d_1$, $d_2$) from the one or more data measurements;
         calculate one or more shock front angles ($\mu+\alpha$, $\mu-\alpha$) from the one or more shock front distances ($d_1$, $d_2$); and
         calculate one or more air data parameters from the one or more shock front angles ($\mu+\alpha$, $\mu-\alpha$), wherein the calculated one or more air data parameters comprise one or more of angle of attack ($\alpha$), angle of sideslip, or Mach angle.

7. The system (400) of claim 6, wherein the light sensor (408) comprises a photomultiplier or an avalanche photodiode.

8. The system (400) of claim 6, wherein the laser (406) is configured to generate an ultraviolet sub-nanosecond pulse.

**Patentansprüche**

1. Verfahren (100), umfassend:

Erhalten einer oder mehrerer Datenmessungen aus einem Abfragebereich (418, 420) mit mindestens einer Lasererfassungs- und Entfernungsmessungs-, LiDAR, Einheit entlang mindestens einer Sichtlinie, wobei die LiDAR-Einheit (222, 224, 404) umfasst:

einen Laser (406), der konfiguriert ist, um einen Lichtstrahl zu erzeugen und zu senden, der zu mindestens einem Abfragebereich (418, 420) entlang mindestens einer Sichtlinie gesendet wird; und
einen Lichtsensor (408), der mit dem Laser (406) gekoppelt und konfiguriert ist, um einen rückgestreuten Teil des Lichtstrahls zu empfangen, der einem Stoßfrontereignis entspricht; und

Senden der einen oder mehreren Datenmessungen an einen Prozessor (412), der dazu dient, eine Datenverarbeitung durchzuführen, die umfasst:

Extrahieren eines oder mehrerer Stoßfrontabstände ($d_1$, $d_2$) aus der einen oder den mehreren Datenmessungen;
Berechnen eines oder mehrerer Stoßfrontwinkel ($\mu+\alpha$, $\mu-\alpha$) aus dem einen oder den mehreren Stoßfrontabständen ($d_1$, $d_2$); und
Berechnen eines oder mehrerer Luftdatenparameter aus dem einen oder den mehreren Stoßfrontwinkeln ($\mu+\alpha$, $\mu-\alpha$), wobei der eine oder die mehreren berechneten Luftdatenparameter einen oder mehrere von Anstellwinkel ($\alpha$), Schiebewinkel oder Machwinkel umfassen.

2. Verfahren (100) nach Anspruch 1, wobei sich der Abfragebereich (418, 420) während des Fluges außerhalb eines Flugzeugs (210, 402) befindet.

3. Verfahren (100) nach Anspruch 2, wobei sich das Flugzeug (210, 402) mit einer Überschallgeschwindigkeit bewegt.

4. Verfahren (100) nach Anspruch 3, wobei der eine oder die mehreren Stoßfrontabstände ($d_1$, $d_2$) Bugstoßfrontabstände neben einer Nase (212) des Flugzeugs (210, 402) sind.

5. Verfahren (100) nach Anspruch 1, wobei das Extrahieren einer oder mehrerer Stoßfrontabstände ($d_1$, $d_2$) ferner das Berechnen einer Zeitverzögerung zwischen einer ersten Zeit, wenn ein Lichtstrahl entlang der mindestens einen Sichtlinie von der mindestens einen LiDAR-Einheit (222, 224, 404) gesendet wird, und einer zweiten Zeit, wenn ein rückgestreuter Teil des Lichtstrahls vom Abfragebereich (418, 420) empfangen wird, und Bestimmen des einen oder der mehreren Stoßfrontabstände ($d_1$, $d_2$) basierend auf der Zeitverzögerung.

6. System (400), umfassend:
ein Lasererfassungs- und Entfernungsmessungs-, LiDAR, Luftdatensystem (400), umfassend:

eine LiDAR-Einheit (222, 224, 404), umfassend:

einen Laser (406), der konfiguriert ist, um einen Lichtstrahl zu erzeugen und zu senden, der zu mindestens einem Abfragebereich (418, 420) entlang mindestens einer Sichtlinie gesendet wird; und
einen Lichtsensor (408), der mit dem Laser (406) gekoppelt und konfiguriert ist, um einen rückgestreuten Teil des Lichtstrahls zu empfangen, der einem Stoßfrontereignis entspricht; und

ein Verarbeitungssystem (410), das mit der LiDAR-Einheit (222, 224, 404) gekoppelt ist, wobei das Verarbeitungssystem (410) dient zum:

Empfangen einer oder mehrerer Datenmessungen, die dem rückgestreuten Teil des Lichtstrahls entsprechen;

Extrahieren eines oder mehrerer Stoßfrontabstände ($d_1$, $d_2$) aus der einen oder den mehreren Datenmessungen;

Berechnen eines oder mehrerer Stoßfrontwinkel ($\mu+\alpha$, $\mu-\alpha$) aus dem einen oder den mehreren Stoßfrontabständen ($d_1$, $d_2$); und

Berechnen eines oder mehrerer Luftdatenparameter aus dem einen oder den mehreren Stoßfrontwinkeln ($\mu+\alpha$, $\mu-\alpha$), wobei der eine oder die mehreren berechneten Luftdatenparameter einen oder mehrere von Anstellwinkel ($\alpha$), Schiebewinkel oder Machwinkel umfassen.

**7.** System (400) nach Anspruch 6, wobei der Lichtsensor (408) einen Fotovervielfacher oder eine Avalanche-Fotodiode umfasst.

**8.** System (400) nach Anspruch 6, wobei der Laser (406) konfiguriert ist, um einen ultravioletten Sub-Nanosekunden-Impuls zu erzeugen.

**Revendications**

**1.** Procédé (100) comprenant :

l'obtention d'au moins une mesure de données à partir d'une zone d'interrogation (418, 420) comportant au moins une unité de détection et de télémétrie de lumière, LiDAR, le long d'au moins une ligne de visée, l'unité LiDAR (222, 224, 404) comprenant :

un laser (406) conçu pour générer et émettre un faisceau lumineux transmis à l'au moins une zone d'interrogation (418, 420) le long de l'au moins une ligne de visée ; et
un capteur de lumière (408) couplé au laser (406) et conçu pour recevoir une partie rétrodiffusée du faisceau lumineux, laquelle correspond à un événement de front de choc ; et

un envoi de l'au moins une mesure de données à un processeur (412) utilisé pour effectuer un traitement de données comprenant :

l'extraction d'au moins une distance de front de choc ($d_1$, $d_2$) à partir de l'au moins une mesure de données ;
le calcul d'au moins un angle de front de choc ($\mu+\alpha$, $\mu-\alpha$) à partir de l'au moins une distance de front de choc ($d_1$, $d_2$) ; et
le calcul d'au moins un paramètre de données d'air à partir de l'au moins un angle de front de choc ($\mu+\alpha$, $\mu-\alpha$), dans lequel l'au moins un paramètre de données d'air calculé comprend au moins un parmi un angle d'attaque ($\alpha$), un angle de dérapage, ou un angle de Mach.

**2.** Procédé (100) selon la revendication 1, dans lequel la zone d'interrogation (418, 420) est à l'extérieur d'un aéronef (210, 402) pendant le vol.

**3.** Procédé (100) selon la revendication 2, dans lequel l'aéronef (210, 402) se déplace à une vitesse supersonique.

**4.** Procédé (100) selon la revendication 3, dans lequel l'au moins une distance de front de choc ($d_1$, $d_2$) est une distance de front d'onde de choc adjacente à un nez (212) de l'aéronef (210, 402).

**5.** Procédé (100) selon la revendication 1, dans lequel une extraction de l'au moins une distance de front de choc ($d_1$, $d_2$) comprend en outre le calcul d'un délai entre un premier moment où un faisceau lumineux le long de l'au moins une ligne de visée est transmis depuis l'au moins une unité LiDAR (222, 224, 404) et une seconde moment lorsqu'une partie rétrodiffusée du faisceau lumineux est reçue de la zone d'interrogation (418, 420), et la détermination de l'au moins une distance de front de choc ($d_1$, $d_2$) en fonction de la temporisation.

**6.** Système (400) comprenant :
un système de données d'air de détection et de télémétrie de lumière, LiDAR, (400), comprenant :

une unité LiDAR (222, 224, 404) comprenant :

un laser (406) conçu pour générer et émettre un faisceau lumineux transmis à l'au moins une zone d'interrogation (418, 420) le long de l'au moins une ligne de visée ; et
un capteur de lumière (408) couplé au laser (406) et conçu pour recevoir une partie rétrodiffusée du faisceau lumineux, laquelle correspond à un événement de front de choc ; et

un système de traitement (410) couplé à l'unité LiDAR (222, 224, 404), dans lequel le système de traitement (410) est conçu :

pour recevoir au moins une mesure de données correspondant à la partie rétrodiffusée du faisceau lumineux ;
pour extraire au moins une distance de front de choc ($d_1$, $d_2$) à partir de l'au moins une mesure de données ;
pour calculer au moins un angle de front de choc ($\mu+\alpha$, $\mu-\alpha$) à partir de l'au moins une distance de front de choc ($d_1$, $d_2$) ; et
pour calculer au moins un paramètre de données d'air à partir de l'au moins un angle de front de choc ($\mu+\alpha$, $\mu-\alpha$), dans lequel l'au moins un paramètre de données d'air calculé comprend au moins un parmi un angle d'attaque ($\alpha$), un angle de dérapage, ou un angle de Mach.

7. Système (400) selon la revendication 6, dans lequel le capteur de lumière (408) comprend un photomultiplicateur ou une photodiode à avalanche.

8. Système (400) selon la revendication 6, dans lequel le laser (406) est conçu pour générer une impulsion ultraviolette inférieure à la nanoseconde.

100

```
┌─────────────────────────────────────────────┐
│          Receive LiDAR data measurements     │
└─────────────────────────────────────────────┘
```
110

120

```
┌─────────────────────────────────────────────┐
│        Extract shock front distances from    │
│              data measurements               │
└─────────────────────────────────────────────┘
```
122

```
┌─────────────────────────────────────────────┐
│        Calculate shock front angles from     │
│              shock front distances           │
└─────────────────────────────────────────────┘
```
124

```
┌─────────────────────────────────────────────┐
│       Calculate air data parameters from     │
│               shock front angles             │
└─────────────────────────────────────────────┘
```
126

FIG. 1

FIG. 2

FIG. 3

400

Shock Front
Application 416

Processor 412    Memory 414

Processing System 410

Laser
406

Light Sensor
408

LiDAR Unit 404

LiDAR Air Data
System 403

Interrogation
Region 418

Aircraft 402

Interrogation
Region 420

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2937808 A
- US 3172104 A
- US 2013094012 A1
- US 2017168161 A1

### Non-patent literature cited in the description

- **HAGLUND, G. T. ; KANE, E. J.** *Analysis of Sonic Boom Measurements Near Shock Wave Extremities for Flight Near Mach 1.0 and for Airplane Accelerations, (CR-2417),* 1974
- **MAGLIERI, D. J. ; RITCHIE, V. S. ; BRYANT, J. F.** *Nasa Technical Note, In-Flight Shock-Wave Pressure Measurements Above and Below a Bomber Airplane at Mach Numbers from 1.42 to 1.69,* 1963
- *Equation, Tables and Charts for Compressible Flow,* 1953, 73